# EUROPEAN PATENT APPLICATION

(11) **EP 4 679 061 A1**
(43) Date of publication of application: **14.01.2026**
(21) Application number: 24770388.7
(22) Date of filing: 16.02.2024
(51) Int. Cl.: G01N 21/01, G01B 15/04, G01L 1/25, G01N 21/3581

(54) **ELECTROMAGNETIC WAVE MEASUREMENT DEVICE, ELECTROMAGNETIC WAVE MEASUREMENT METHOD, AND ELECTROMAGNETIC WAVE MEASUREMENT PROGRAM**

(30) Priority: 10.03.2023 JP 2023037631
(71) Applicant: Sumitomo Heavy Industries, Ltd., Tokyo 141-6025 (JP)
(72) Inventor: TANIUCHI, Kana, Yokosuka-shi Kanagawa 237-8555 (JP); KITAHARA, Hideaki, Fukui-shi Fukui 910-8507 (JP); TANI, Masahiko, Fukui-shi Fukui 910-8507 (JP); FURUYA, Gaku, Fukui-shi Fukui 910-8507 (JP)
(74) Representative: Louis Pöhlau Lohrentz
(86) International application number: PCT/JP2024/005573
(87) International publication number: WO 2024/190273

(57) **Abstract**

An electromagnetic wave measurement device 1 includes electromagnetic wave irradiation units 21 and/or 31 that irradiate a sample S with an electromagnetic wave such as a terahertz wave, electromagnetic wave detection units 22 and/or 32 that detect the electromagnetic wave such as the terahertz wave from the sample S, recognition units 51 and/or 52 that recognize a spatial variation in an internal state and/or a shape of the sample S, based on the electromagnetic wave such as the terahertz wave detected by the electromagnetic wave detection units 22 and/or 32, and a spatial resolution determination unit 53 that determines a spatial resolution of the electromagnetic wave such as the terahertz wave for irradiating each portion of an object of the same type as the sample S, in accordance with the spatial variation in the internal state and/or the shape.

## Description

### Technical Field

The present invention relates to an electromagnetic wave measurement device such as a spectrometer.

### Background Art

PTL 1 discloses a device that measures an internal state of a sample by using a terahertz wave which is an electromagnetic wave having a frequency in a terahertz (10¹²) region.

In an electromagnetic wave measurement device that irradiates a sample with an electromagnetic wave including a terahertz wave to the electromagnetic wave, a spatial resolution is determined by a cross-sectional size of the electromagnetic wave (hereinafter, also referred to as a beam diameter or a beam size). When the beam diameter is large, the spatial resolution becomes lower, and when the beam diameter is small, the spatial resolution becomes higher.

### Citation List

### Patent Literature

[PTL 1] Japanese Patent No. 6843397

### Summary of Invention

### Technical Problem

When the spatial resolution is lowered, whereas measurement accuracy becomes lower, there is an advantage in that a time for scanning the sample is shortened or the like. When the spatial resolution becomes higher, whereas the time for scanning the sample is lengthened, there is an advantage in that the measurement accuracy becomes higher or the like. In this way, there are advantages and disadvantages in setting the spatial resolution.

The present invention has been made in view of these circumstances, and an object of the present invention is to provide an electromagnetic wave measurement device or the like capable of setting an appropriate spatial resolution for each of irradiation portions of an electromagnetic wave.

### Solution to Problem

According to an aspect of the present invention, in order to solve the above-described problem, there is provided an electromagnetic wave measurement device including an electromagnetic wave irradiation unit that irradiates a sample with an electromagnetic wave, an electromagnetic wave detection unit that detects the electromagnetic wave from the sample, a recognition unit that recognizes a spatial variation in an internal state and/or a shape of the sample, based on the electromagnetic wave detected by the electromagnetic wave detection unit, and a spatial resolution determination unit that determines a spatial resolution of the electromagnetic wave for irradiating each portion of an object of the same type as the sample, in accordance with the spatial variation in the internal state and/or the shape.

In this aspect, the spatial resolution of the electromagnetic wave for irradiating each portion of the object of the same type as the sample is determined, in accordance with the spatial variation in the internal state and/or the shape of the sample recognized by the electromagnetic wave. For example, a relatively high spatial resolution is set in a portion in which the spatial variation in the internal state and/or the shape of the sample is relatively large, and a relatively low spatial resolution is set in a portion in which the spatial variation in the internal state and/or the shape of the sample is relatively small.

According to another aspect of the present invention, there is provided an electromagnetic wave measurement method. The method includes an electromagnetic wave irradiation step of irradiating a sample with an electromagnetic wave, an electromagnetic wave detection step of detecting the electromagnetic wave from the sample, a recognition step of recognizing a spatial variation in an internal state and/or a shape of the sample, based on the electromagnetic wave detected in the electromagnetic wave detection step, and a spatial resolution determination step of determining a spatial resolution of the electromagnetic wave for irradiating each portion of an object of the same type as the sample, in accordance with the spatial variation in the internal state and/or the shape.

Any combination of the above-described components, or those in which expressions of these components are converted into methods, devices, systems, recording media, computer programs, or the like are also included in the present invention.

### Advantageous Effects of Invention

According to the present invention, an appropriate spatial resolution can be set for each irradiation portion of the electromagnetic wave.

### Brief Description of Drawings

FIG. 1 illustrates an electromagnetic wave measurement device that performs preliminary measurement on a sample as a target.
FIG. 2 illustrates an electromagnetic wave measurement device that performs primary measurement on an object as a target.
FIGS. 3A and 3B illustrate a specific example of a process of determining a spatial resolution which is performed by a spatial resolution determination unit.
FIG. 4 illustrates an example of a beam size variable technique.
FIG. 5 illustrates another example of the beam size variable technique.
FIG. 6 is a flowchart illustrating an example of processes of the preliminary measurement on the sample and the primary measurement on the object which are performed by the electromagnetic wave measurement device.

### Description of Embodiments

Hereinafter, a mode for carrying out the present invention (hereinafter also referred to as an embodiment) will be described in detail with reference to the drawings. In the description and/or the drawings, the same reference numerals will be assigned to identical or equivalent components, members, processes, and the like, and repeated description thereof will be omitted. A scale and a shape of each portion illustrated in the drawings are set for convenience to simplify the description, and are not limitedly interpreted unless otherwise specified. The embodiment is merely an example, and does not limit the scope of the present invention. All features described in the embodiment and combinations thereof are not necessarily essential to the present invention.

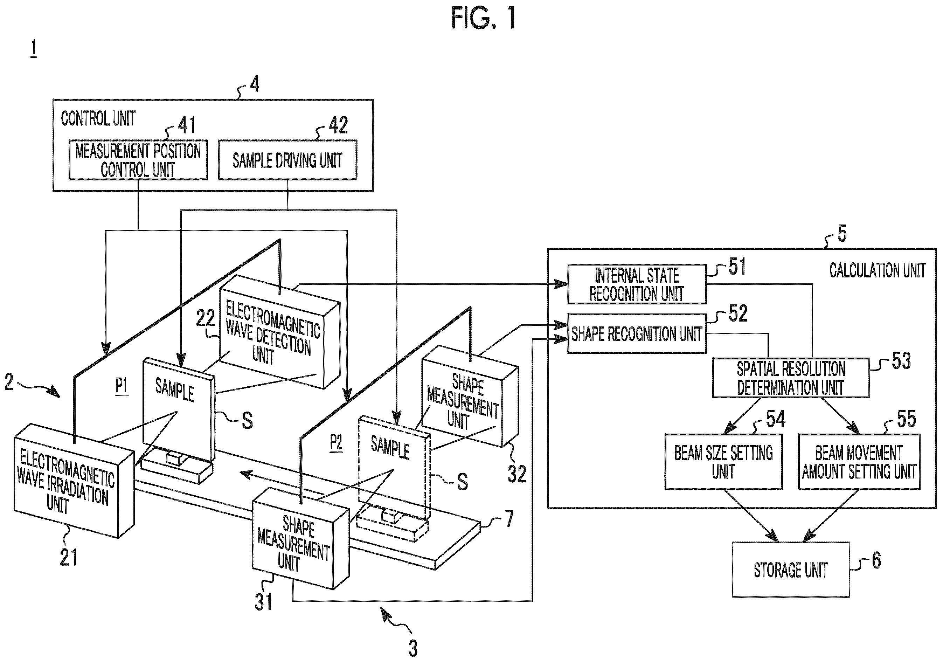

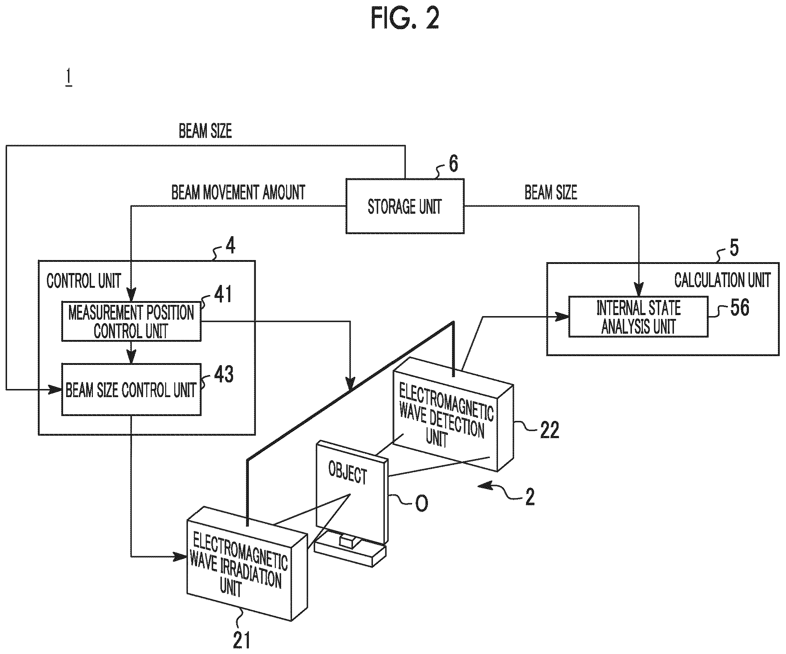

FIGS. 1 and 2 schematically illustrate a configuration of an electromagnetic wave measurement device 1 according to an embodiment of the present invention. A method or a purpose of measurements performed by the electromagnetic wave measurement device 1 is not particularly limited. However, for example, refractive index anisotropy and/or dielectric anisotropy in an object O are measured through an electromagnetic wave, and an internal state such as residual stress, distortion, orientation, and deterioration in the object O is evaluated.

FIG. 1 illustrates the electromagnetic wave measurement device 1 that performs a preliminary measurement on a sample S. FIG. 2 illustrates an electromagnetic wave measurement device 1 that performs a primary measurement on the object O of the same type as the sample S. For example, the sample S and the object O are substantially the same products (for example, resin molding products) manufactured by the same manufacturing device (for example, an injection molding machine) and/or the same manufacturing method. That is, the sample S and the object O belong to the same product group. The sample S is one or a small number of products extracted from the product group for the preliminary measurement. Typically, the primary measurement of a large number of the objects O belonging to the same product group as the sample S is performed, based on control parameters (beam size or beam movement amount) adjusted in accordance with a result of the preliminary measurement of the sample S as will be described later.

In FIG. 1, the electromagnetic wave measurement device 1 includes an internal state measurement device 2, a shape measurement device 3, a control unit 4, a calculation unit 5, and a storage unit 6. Some of functional blocks may be omitted as long as the electromagnetic wave measurement device 1 can realize at least some of operations and/or advantageous effects described below. These functional blocks are realized by a cooperation of a hardware resource such as a central processing unit of a computer, a memory, an input device, an output device, and a peripheral device connected to the computer, and software executed by using the hardware resources. Regardless of a type or an installation location of the computer, each of the above-described functional blocks may be realized by the hardware resource of a single computer, or may be realized by combining the hardware resources distributed to a plurality of the computers.

The internal state measurement device 2 measures an internal state such as an internal stress of the sample S by irradiating the sample S located at an internal state measurement position P1 with the electromagnetic wave. Specifically, the internal state measurement device 2 includes an electromagnetic wave irradiation unit 21 that irradiates the sample S at the internal state measurement position P1 with the electromagnetic wave, and an electromagnetic wave detection unit 22 that detects the electromagnetic wave from the sample S. The electromagnetic wave emitted for irradiation by the electromagnetic wave irradiation unit 21 has any desired frequency suitable for measuring the internal states of the sample S and the object O.

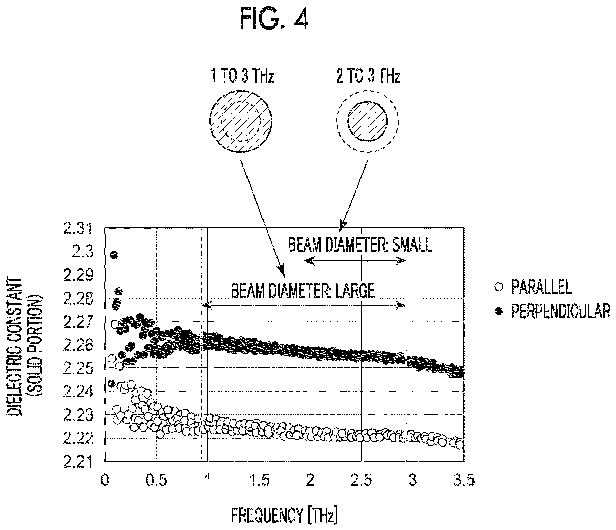

In the present embodiment, the terahertz wave having a frequency in a terahertz region is used as a measurement electromagnetic wave. The terahertz wave has an intermediate property between a low frequency radio wave and high frequency light, and for example, like a radio wave, the terahertz wave can be transmitted through a polymer material through which general light cannot be transmitted. In addition, the terahertz wave is strongly affected by absorption or the like due to an intrinsic vibration in a biomolecule or other polymer material. According to this feature, the terahertz wave is preferably used for a spectrometry (spectrum measurement) of the polymer material. In addition, as in a terahertz time-domain spectroscopy (to be described later with reference to FIG. 4), when the measurement is possible in a wide band (in an example in FIG. 4, a frequency band of approximately 1 to 3 THz) and a degree of frequency dependence of a measurement result in the wide band is low, a beam size of the terahertz wave can be easily adjusted by selecting a frequency range. Therefore, the terahertz wave is suitable for controlling the beam size during the primary measurement in FIG. 2.

The electromagnetic wave irradiation unit 21 irradiates the sample S with the terahertz wave at a measurement position on the sample S designated by the measurement position control unit 41 in the control unit 4. Unlike a time of the primary measurement in FIG. 2 (to be described later), at a time of the preliminary measurement in FIG. 1, the electromagnetic wave irradiation unit 21 irradiates the sample S with the terahertz wave having a constant beam size. In this way, at the time of the preliminary measurement, the spatial resolution of the terahertz wave determined by the beam size is constant. Hereinafter, a constant spatial resolution at the time of the preliminary measurement will also be referred to as a reference spatial resolution. In order to accurately perform a spatial resolution determination process by the spatial resolution determination unit 53 in the calculation unit 5 (to be described later), it is preferable that the reference spatial resolution at the time of the preliminary measurement is the highest spatial resolution that can be realized by the internal state measurement device 2. In other words, the electromagnetic wave irradiation unit 21 irradiates the sample S with the terahertz wave having a minimum beam size that can be realized. The measurement position control unit 41 performs two-dimensional scanning (scanning) such that substantially the entire surface of the sample S is sequentially irradiated with the terahertz wave having a constant (preferably minimum) beam size from the electromagnetic wave irradiation unit 21.

The electromagnetic wave detection unit 22 sequentially detects the terahertz wave from each measurement position or each irradiation position on the sample S. The electromagnetic wave detection unit 22 in the illustrated example is provided on a side opposite to the electromagnetic wave irradiation unit 21 with respect to the sample S at the internal state measurement position P1. Therefore, the electromagnetic wave detection unit 22 detects the terahertz wave transmitted through the sample S. However, the electromagnetic wave detection unit 22 may be provided on the same side as the electromagnetic wave irradiation unit 21 with respect to the sample S at the internal state measurement position P1, and may detect the terahertz wave reflected by the sample S or other electromagnetic waves.

A detection result of the terahertz wave in the electromagnetic wave detection unit 22 is provided to the internal state recognition unit 51 in the calculation unit 5. The internal state recognition unit 51 recognizes the internal state such as the internal stress at each measurement position on the sample S, based on the detection result provided from the electromagnetic wave detection unit 22. For example, the internal state of the sample S can be recognized from the detection result of the terahertz wave (or the radio wave) by using the technique disclosed in PTL 1 (including the background art). In addition, when the internal state measurement device 2 uses general light other than the terahertz wave, the internal state recognition unit 51 can recognize the internal state of the sample S from a detection result of the light, for example, by using a known spectrometry (spectrum measurement) technique.

The shape measurement device 3 measures a shape of a surface or the like of the sample S at a shape measurement position P2 different from the internal state measurement position P1. The surface shape of the sample S measured by the shape measurement device 3 may be the shape itself designed for the sample S, or may deviate from the shape designed by an error when the sample S is manufactured. A method of the shape measurement device 3 is not limited as long as the shape measurement device 3 can directly or indirectly measure an outer shape of the sample S. As an example, as in the internal state measurement device 2, the shape measurement device 3 may measure the shape of the sample S by irradiating the sample S at the shape measurement position P2 with the electromagnetic wave.

The internal state measurement device 2 and the shape measurement device 3 in this case may be configured as a single measurement device that uses the electromagnetic wave. In this case, the internal state measurement position P1 and the shape measurement position P2 are the same as each other. However, a frequency of the electromagnetic wave for measuring the internal state of the sample S and a frequency of the electromagnetic wave for measuring the shape of the sample S may be different from each other. For example, a low frequency terahertz wave or a radio wave that can be transmitted through the sample S (compared to light) may be used for measuring the internal state of the sample S, and light such as high frequency visible light that is reflected or scattered (compared to the radio wave) in accordance with the shape of the sample S may be used for measuring the shape of the sample S.

When the shape measurement device 3 uses the electromagnetic wave, the electromagnetic wave irradiation unit 31 and the electromagnetic wave detection unit 32 (both are illustrated as the "shape measurement unit") are provided in the same manner as the electromagnetic wave irradiation unit 21 and the electromagnetic wave detection unit 22 in the internal state measurement device 2. The electromagnetic wave irradiation unit 31 irradiates the sample S at the shape measurement position P2 with the electromagnetic wave, and the electromagnetic wave detection unit 32 detects the electromagnetic wave from the sample S. The electromagnetic wave emitted for irradiation by the electromagnetic wave irradiation unit 31 has any desired frequency suitable for measuring the outer shape of the sample S as described above.

The electromagnetic wave irradiation unit 31 irradiates the sample S with the electromagnetic wave at the measurement position on the sample S designated by the measurement position control unit 41 in the control unit 4. At the time of the preliminary measurement in FIG. 1, as in the electromagnetic wave irradiation unit 21, the electromagnetic wave irradiation unit 31 irradiates the sample S with the electromagnetic wave having a constant beam size. Here, it is preferable that the constant beam size of the electromagnetic wave irradiation unit 31 is equal to or smaller than the constant beam size of the electromagnetic wave irradiation unit 21. Hereinafter, in order to simplify the description, the constant beam size used at the time of the preliminary measurement is substantially equal between the electromagnetic wave irradiation unit 21 and the electromagnetic wave irradiation unit 31. In other words, the reference spatial resolutions (preferably, the highest spatial resolutions that can be realized by the internal state measurement device 2 and/or the shape measurement device 3) at the time of the preliminary measurement of the internal state measurement device 2 and the shape measurement device 3 are substantially equal to each other. The measurement position control unit 41 performs two-dimensional scanning (scanning) such that substantially the entire surface of the sample S is sequentially irradiated with the electromagnetic wave having the constant (preferably minimum) beam size from the electromagnetic wave irradiation unit 31.

The electromagnetic wave detection unit 32 sequentially detects the electromagnetic wave from each measurement position or each irradiation position on the sample S. The electromagnetic wave detection unit 32 in the illustrated example is provided on a side opposite to the electromagnetic wave irradiation unit 31 with respect to the sample S at the shape measurement position P2. Therefore, the electromagnetic wave detection unit 32 detects the electromagnetic wave transmitted through the sample S. However, the electromagnetic wave detection unit 32 may be provided on the same side as the electromagnetic wave irradiation unit 31 with respect to the sample S at the shape measurement position P2, and may detect the electromagnetic wave reflected by the sample S. In addition, when the electromagnetic wave measured by the shape measurement device 3 cannot be transmitted through the sample S, shape measurement units 31 and 32 such as an image sensor that individually detect the electromagnetic wave of the light or the like reflected or scattered in accordance with the shape of a front surface (for example, a front side surface in FIG. 1) and a back surface (for example, a back side surface in FIG. 1) of the sample S may be provided on the front surface side and the back surface side. A measurement result of the shape of the sample S measured by the shape measurement device 3 is provided to the shape recognition unit 52 in the calculation unit 5.

As in the example in FIG. 1, when the internal state measurement device 2 and the shape measurement device 3 are separate devices and positions where the internal state measurement device 2 and the shape measurement device 3 are provided (internal state measurement position P1 and shape measurement position P2) are different from each other, there is provided a sample driving unit 42 that moves the sample S which is a measurement target of both devices between the internal state measurement position P1 where the electromagnetic wave irradiation unit 21 and the electromagnetic wave detection unit 22 are provided and the shape measurement position P2 where the shape measurement device 3 (electromagnetic wave irradiation unit 31 and electromagnetic wave detection unit 32) is provided. In the preliminary measurement of the sample S in FIG. 1, two types of measurements including the measurement of the internal state by the internal state measurement device 2 at the internal state measurement position P1 and the measurement of the shape by the shape measurement device 3 at the shape measurement position P2 are sequentially performed, and the sample driving unit 42 drives the sample S from one side to the other side of the internal state measurement position P1 and the shape measurement position P2 between the two types of measurements. For example, the sample driving unit 42 drives a movable stage 7 on which the sample S is placed. In this manner, the sample driving unit 42 drives the sample S between the internal state measurement position P1 and the shape measurement position P2.

The control unit 4 includes the measurement position control unit 41 and the sample driving unit 42 described above. The calculation unit 5 configured to include a computer or a processor which is the same as or different from the control unit 4 includes an internal state recognition unit 51, a shape recognition unit 52, a spatial resolution determination unit 53, a beam size setting unit 54, a beam movement amount setting unit 55, and an internal state analysis unit 56 (FIG. 2).

The internal state recognition unit 51 and/or the shape recognition unit 52 configure a recognition unit that recognizes a spatial variation in the internal state and/or the shape of the sample S, based on the electromagnetic wave detected by the electromagnetic wave detection units 22 and/or 32. Specifically, the internal state recognition unit 51 recognizes the spatial variation in the internal state of the sample S, based on the electromagnetic wave such as the terahertz wave detected by the electromagnetic wave detection unit 22, and the shape recognition unit 52 recognizes the spatial variation in the shape of the sample S, based on the electromagnetic wave (terahertz wave may be used) detected by the electromagnetic wave detection unit 32. The spatial resolution determination unit 53 determines the spatial resolution of the electromagnetic wave such as the terahertz wave for irradiating each portion of the object O (FIG. 2) of the same type as the sample S in accordance with the spatial variation in the internal state recognized by the internal state recognition unit 51 and/or the shape recognized by the shape recognition unit 52.

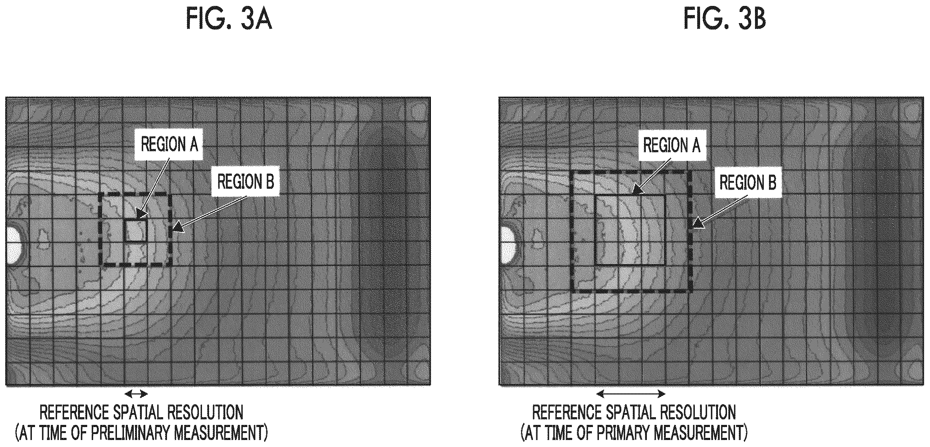

FIGS. 3A and 3B illustrate a specific example of a process of determining the spatial resolution by the spatial resolution determination unit 53. In FIGS. 3A and 3B, a preliminary measurement result of the internal stress of the sample S by the internal state measurement device 2 is schematically illustrated by a contour line. A length of a side of a pixel or a cell having a square shape in both the drawings corresponds to a constant reference spatial resolution of the terahertz wave or the like used at the time of the preliminary measurement. Alternatively, a size of each pixel corresponds to a constant beam size of the terahertz wave or the like used at the time of the preliminary measurement.

In FIG. 3A, the spatial resolution determination unit 53 determines an appropriate spatial resolution by targeting one pixel indicated as a "region A". In this case, for example, the spatial resolution determination unit 53 refers to a pixel group of a "region B" including the "region A". Specifically, when the variation in the internal stress (recognized by the internal state recognition unit 51) in the "region A" and the "region B" and/or the variation in the shape (recognized by the shape recognition unit 52) in the "region A" and the "region B" is equal to or smaller than a predetermined threshold (first threshold for the spatial variation in the internal stress and/or second threshold for the spatial variation in the shape), the spatial resolution determination unit 53 lowers the spatial resolution of the electromagnetic wave such as the terahertz wave for irradiating the "region A" in the object O (FIG. 2), compared to the reference spatial resolution.

As a result, as illustrated in FIG. 3B, in the primary measurement of the object O, the "region A" is irradiated with the electromagnetic wave such as the terahertz wave having a large beam size (that is, the spatial resolution is lower (than the reference spatial resolution)). Since the spatial variation in the internal stress and/or the shape of the sample S in the "region A" of the reference spatial resolution in FIG. 3A is small (equal to or smaller than a predetermined threshold), the primary measurement of the object O can be appropriately performed even when the "region A" is "enlarged" as in FIG. 3B. In this way, according to the present embodiment, a measurement time can be shortened by lowering the spatial resolution (increasing the beam size) for a portion less affected by degradation in measurement accuracy in the object O.

On the other hand, when the variation in the internal stress and/or the shape in the "region A" and the "region B" in FIG. 3A is equal to or greater than a predetermined threshold, the spatial resolution determination unit 53 maintains the spatial resolution of the electromagnetic wave such as the terahertz wave for irradiating the "region A" in the object O (FIG. 2) (highest) at the reference spatial resolution. In this way, according to the present embodiment, the measurement accuracy can be maintained by increasing the spatial resolution (by decreasing the beam size) for a portion greatly affected by the degradation in the measurement accuracy in the object O.

The spatial resolution determination unit 53 sequentially performs a process of determining the spatial resolution exemplified for the "region A" in FIGS. 3A and 3B for substantially all of the pixels on the sample S. As a result, the spatial resolution applied to each pixel is individually set in a pixel map of the object O (or the sample S) as illustrated in FIGS. 3A and 3B.

The beam size setting unit 54 sets the spatial resolution determined by the spatial resolution determination unit 53 for each pixel in the object O as the beam size of the electromagnetic wave such as the terahertz wave for irradiating each pixel during the primary measurement (FIG. 2). The beam movement amount setting unit 55 sets a movement amount of the beam such as the terahertz wave in the two-dimensional scanning of the object O at the time of the primary measurement, based on the spatial resolution determined by the spatial resolution determination unit 53 and/or the beam size set by the beam size setting unit 54. For example, in a region to which the reference spatial resolution is applied (region where the spatial variation in the internal stress and/or the shape is large), the beam movement amount is set for each pixel by the beam movement amount setting unit 55. In addition, in a region where the adjustment spatial resolution lower than the reference spatial resolution is applied as in the "region A" in FIG. 3B (region where the spatial variation in the internal stress and/or the shape is small), the beam movement amount (corresponding to the length of the side of the "region A" in FIG. 3B) of a plurality of the pixels is set by the beam movement amount setting unit 55.

The beam size of each pixel set by the beam size setting unit 54 and the beam movement amount in the two-dimensional scanning set by the beam movement amount setting unit 55 are stored in the storage unit 6 as control information used in the primary measurement of the object O (FIG. 2).

The electromagnetic wave measurement device 1 in FIG. 2 performs the primary measurement by targeting the object O of the same type as the sample S preliminarily measured in FIG. 1, based on the control information (beam size and beam movement amount) stored in the storage unit 6. In FIG. 2, the electromagnetic wave measurement device 1 includes the internal state measurement device 2, the control unit 4, the calculation unit 5, and the storage unit 6.

The internal state measurement device 2 may be the same as or different from that at the time of the preliminary measurement in FIG. 1. The internal state measurement device 2 measures the internal state such as the internal stress of the object O by irradiating the object O as the measurement target with the electromagnetic wave. Specifically, the internal state measurement device 2 includes the electromagnetic wave irradiation unit 21 that irradiates the object O with the electromagnetic wave, and the electromagnetic wave detection unit 22 that detects the electromagnetic wave from the object O. The electromagnetic wave emitted for irradiation by the electromagnetic wave irradiation unit 21 has any desired frequency suitable for measuring the internal state of the object O. Preferably, the terahertz wave which is substantially the same as the terahertz wave at the time of the preliminary measurement in FIG. 1 is used as a measurement electromagnetic wave.

The electromagnetic wave irradiation unit 21 irradiates the measurement position on the object O designated by the measurement position control unit 41 in the control unit 4 with the terahertz wave. Unlike the time of the preliminary measurement in FIG. 1 described above, at the time of the primary measurement in FIG. 2, the electromagnetic wave irradiation unit 21 irradiates the object O with the terahertz wave having a beam size variable for each measurement position (pixel). For this purpose, the control unit 4 is provided with a beam size control unit 43 serving as an electromagnetic wave size control unit. The beam size control unit 43 controls the beam size of the electromagnetic wave for irradiating each measurement position of the object O by the electromagnetic wave irradiation unit 21, in accordance with the spatial resolution determined by the spatial resolution determination unit 53, based on the preliminary measurement of the sample S. Specifically, the beam size control unit 43 uses the beam size for each measurement position (pixel) stored in the storage unit 6. The measurement position or the irradiation position of the electromagnetic wave irradiation unit 21 can be acquired from the measurement position control unit 41 in the same control unit 4. Therefore, the beam size control unit 43 can apply the beam size corresponding to the measurement position (pixel) to the electromagnetic wave irradiation unit 21.

As described above with reference to FIGS. 3A and 3B, in a region where the spatial variation in the internal stress and/or the shape of the sample S and the object O is large, the highest reference spatial resolution is typically applied. Therefore, the beam size control unit 43 typically applies a minimum beam size to the electromagnetic wave irradiation unit 21. In addition, in a region where the spatial variation in the internal stress and/or the shape of the sample S and the object O is small, the adjustment spatial resolution lower than the reference spatial resolution is applied as in the "region A" in FIG. 3B. Therefore, the beam size control unit 43 applies the beam size larger than the minimum beam size (in an example in FIG. 3B, corresponding to 9 pixels) to the electromagnetic wave irradiation unit 21.

FIG. 4 illustrates an example of a beam size variable technique to which the beam size control unit 43 and the electromagnetic wave irradiation unit 21 can be applied to the terahertz wave or the like. Based on a principle of Huygens, this technique utilizes a fact that straightness of the diffracted electromagnetic wave varies depending on the frequency. As the frequency of the electromagnetic wave is higher, the straightness is higher, and as the frequency of the electromagnetic wave is lower, the straightness is lower. As schematically illustrated in FIG. 4, when a relatively high frequency band (in the illustrated example, approximately 2 to 3 THz) is selected, the straightness of the beam becomes higher, and the beam diameter decreases. In addition, when a relatively low frequency band (in the illustrated example, approximately 1 to 3 THz) is selected, the straightness of the beam becomes lower, and the beam diameter increases. In addition, "parallel" and "perpendicular" in FIG. 4 respectively represent polarization of the terahertz wave.

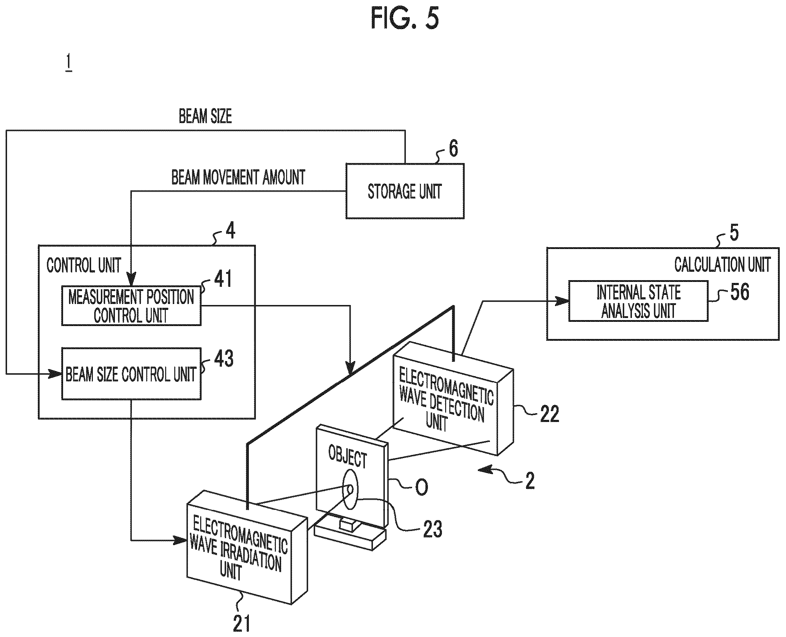

FIG. 5 illustrates another example of the beam size variable technique. In this example, an aperture mechanism 23 or an iris for controlling the beam size is provided between the electromagnetic wave irradiation unit 21 and the object O. The beam size control unit 43 controls the size of the beam for irradiating the object O by controlling an opening size in the aperture mechanism 23, based on the beam size at each measurement position (pixel) stored in the storage unit 6.

As still another example of the beam size variable technique, for example, when the electromagnetic wave irradiation unit 21 and/or the electromagnetic wave detection unit 22 are configured to include a plurality of arrayed elements, the number of actually used elements is controlled by the beam size control unit 43. In this manner, an advantageous effect substantially equivalent to that in controlling the size of the beam for irradiating the object O is obtained.

As in the time of the preliminary measurement in FIG. 1, the measurement position control unit 41 performs two-dimensional scanning (scanning) such that substantially the entire surface of the object O is sequentially irradiated with the terahertz wave having a variable beam size from the electromagnetic wave irradiation unit 21. In the preliminary measurement in which the reference spatial resolution corresponding to one pixel is always applied, the beam movement amount in the two-dimensional scanning is always one pixel by one pixel. However, in the primary measurement, the beam size is variable by the beam size control unit 43. Therefore, the beam movement amount is controlled by the measurement position control unit 41 in accordance with the beam size. For example, in a region where the adjustment spatial resolution lower than the reference spatial resolution is applied as in the "region A" in FIG. 3B, the measurement position control unit 41 applies the beam movement amount of the plurality of pixels to the internal state measurement device 2. The measurement position control unit 41 performs the control of the beam movement amount in the two-dimensional scanning as described above, based on the beam movement amount at each measurement position (pixel) set by the beam movement amount setting unit 55 (FIG. 1) and stored in the storage unit 6.

The electromagnetic wave detection unit 22 sequentially detects the terahertz wave from each measurement position or each irradiation position on the object O. The electromagnetic wave detection unit 22 in the illustrated example is provided on a side opposite to the electromagnetic wave irradiation unit 21 with respect to the object O. Therefore, the electromagnetic wave detection unit 22 detects the terahertz wave transmitted through the object O. However, the electromagnetic wave detection unit 22 may be provided on the same side as the electromagnetic wave irradiation unit 21 with respect to the object O, and may detect the terahertz wave reflected by the object O and other electromagnetic waves.

A detection result of the terahertz wave in the electromagnetic wave detection unit 22 is provided to the internal state analysis unit 56 in the calculation unit 5. The internal state analysis unit 56 may be the same as the internal state recognition unit 51 used at the time of the preliminary measurement in FIG. 1. The internal state analysis unit 56 recognizes the internal state such as the internal stress at each measurement position on the object O, based on the detection result provided from the electromagnetic wave detection unit 22. In addition, the internal state analysis unit 56 refers to information on the beam size at each measurement position (pixel) stored in the storage unit 6 (or information on the frequency band used for controlling the beam size) in analyzing the internal state of the object O.

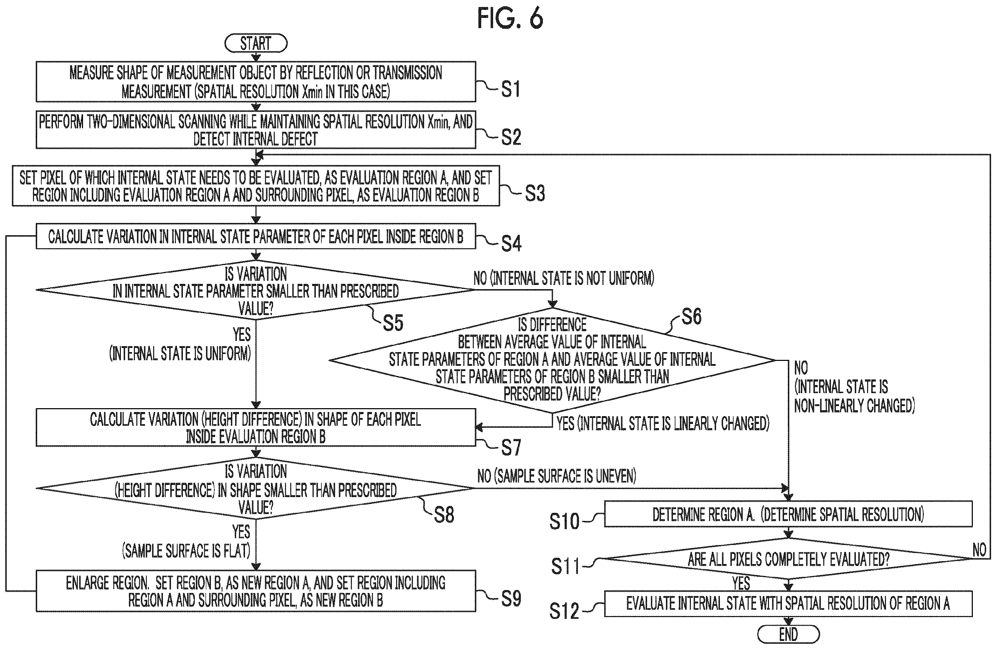

FIG. 6 is a flowchart illustrating an example of processes of the preliminary measurement of the sample S and the primary measurement of the object O which are performed by the electromagnetic wave measurement device 1 according to the present embodiment. In the drawing, for convenience, the preliminary measurement and the primary measurement are illustrated as a series of processes in one flowchart. However, for example, the preliminary measurement and the primary measurement may be performed as different processes at different dates and times. In addition, "S" in the flowchart means a step or a process. S1 to S11 are processes of the preliminary measurement (FIG. 1) of the sample S, and S12 is a process of the primary measurement (FIG. 2) of the object O.

In S1, the shape measurement device 3 measures the shape of the sample S at the shape measurement position P2. As described above, the spatial resolution in S1 is constant at the highest reference spatial resolution. "Xmin" is a minimum distance that can be identified under the reference spatial resolution, and corresponds to a length of a side of a pixel having a square shape in FIGS. 3A and 3B. After S1, the sample S is driven from the shape measurement position P2 to the internal state measurement position P1 by the sample driving unit 42. In S2, the internal state measurement device 2 measures the internal state of the sample S by irradiating the sample S at the internal state measurement position P1 with the electromagnetic wave such as the terahertz wave. As described above, the spatial resolution in S2 is constant at the highest reference spatial resolution, and is equal to the spatial resolution in S1. S1 may be performed earlier, and S2 may be performed later.

In S3, the spatial resolution determination unit 53 selects one pixel serving as a target of the process of determining the spatial resolution as illustrated in FIGS. 3A and 3B, as the "region A", and sets the "region B" including the region A. In S4, the spatial resolution determination unit 53 evaluates the spatial variation in the internal state in the plurality of pixels inside the "region B" recognized by the internal state recognition unit 51, based on the measurement result in S2. In S5, the spatial resolution determination unit 53 determines whether or not the spatial variation in the internal state in the plurality of pixels inside the "region B" in S4 is equal to or smaller than a predetermined first threshold. In a case of "Yes" in S5, the internal state inside the "region B" is substantially uniform, and the process proceeds to S7. In a case of "No" in S5, the internal state inside the "region B" is not uniform, and the process proceeds to S6.

In S6, the spatial resolution determination unit 53 determines whether or not a difference between an average value of internal state parameters (internal stress and the like) inside the "region A" and an average value of internal state parameters inside the "region B" is equal to or smaller than a predetermined third threshold. In a case of "Yes" in S6, the internal state is substantially linearly changed from the "region A" to the "region B", and without any problem, this case is equally treated as the case of "Yes" in S5. Therefore, the process proceeds to S7. In a case of "No" in S6, the internal state is non-linearly changed from the "region A" to the "region B", and when the "region A" is enlarged as in S9 (to be described later), the measurement accuracy may be significantly degraded. Therefore, the process proceeds to S10, and the "region A" is determined without being enlarged. In particular, the "region A" which is not enlarged even once by S9 is determined as a minimum region in an initial state as illustrated in FIG. 3A. This means that the highest reference spatial resolution in the initial state is determined for the pixels in the "region A".

In S7, the spatial resolution determination unit 53 evaluates the spatial variation (height difference or the like) of the shape in the plurality of pixels inside the "region B" recognized by the shape recognition unit 52, based on the measurement result in S1. In S8, the spatial resolution determination unit 53 determines whether or not the spatial variation in the shape of the plurality of pixels inside the "region B" in S7 is equal to or smaller than a predetermined second threshold. In a case of "Yes" in S8, the shape inside the "region B" is substantially uniform, and the process proceeds to S9. In a case of "No" in S8, the shape inside the "region B" is not uniform (for example, an uneven shape), and when the "region A" is enlarged as in S9 (to be described later), the measurement accuracy may be significantly degraded. Therefore, the process proceeds to S10, and the "region A" is determined without being enlarged.

In S9, the spatial resolution determination unit 53 enlarges the "region A" to the original (FIG. 3A) "region B" as in a change from FIG. 3A to FIG. 3B. Then, a new "region B" including the enlarged "region A" is set. Thereafter, the processes in S4 to S9 are repeated until the "region A" is determined in S10. In S11, it is determined whether or not the evaluation of all of the pixels on the sample S (determination of the spatial resolution by the spatial resolution determination unit 53) is completed. In a case of "No" in S11, the process returns to S3, and the processes in S3 to S10 are repeated until "Yes" is determined in S11. When "Yes" is determined in S11, the preliminary measurement of the sample S is completed. In S12 subsequent thereto, the primary measurement of the object O is performed by the internal state measurement device 2 or the like, based on the spatial resolution at each pixel or each measurement position determined in S10.

Hitherto, the present invention has been described with reference to the embodiment. Combinations of the respective components and the respective processes in the embodiment as an example can be modified in various ways, and it is obvious to those skilled in the art that the modifications are included in the scope of the present invention.

The configuration, the operation, and the function of each device or each method described in the embodiment can be realized by hardware resources or software resources, or by cooperation of hardware resources and software resources. As the hardware resources, for example, a processor, a ROM, a RAM, and various integrated circuits can be used. As the software resources, for example, programs such as an operating system and an application can be used.

### Industrial Applicability

The present invention relates to an electromagnetic wave measurement device such as a spectrometer.

### Reference Signs List

- 1: Electromagnetic wave measurement device
- 2: Internal state measurement device
- 3: Shape measurement device
- 6: Storage unit
- 21: Electromagnetic wave irradiation unit
- 22: Electromagnetic wave detection unit
- 23: Aperture mechanism
- 41: Measurement position control unit
- 42: Sample driving unit
- 43: Beam size control unit
- 51: Internal state recognition unit
- 52: Shape recognition unit
- 53: Spatial resolution determination unit
- 54: Beam size setting unit
- 55: Beam movement amount setting unit
- 56: Internal state analysis unit
- P1: Internal state measurement position
- P2: Shape measurement position

## Claims

1. An electromagnetic wave measurement device comprising:
an electromagnetic wave irradiation unit that irradiates a sample with an electromagnetic wave;
an electromagnetic wave detection unit that detects the electromagnetic wave from the sample;
a recognition unit that recognizes a spatial variation in an internal state and/or a shape of the sample, based on the electromagnetic wave detected by the electromagnetic wave detection unit; and
a spatial resolution determination unit that determines a spatial resolution of the electromagnetic wave for irradiating each portion of an object of the same type as the sample, in accordance with the spatial variation in the internal state and/or the shape.

2. The electromagnetic wave measurement device according to claim 1,
wherein the electromagnetic wave irradiation unit irradiates the sample with the electromagnetic wave having a reference spatial resolution, and
the spatial resolution determination unit lowers the spatial resolution of the electromagnetic wave for irradiating a portion in which the spatial variation in the internal state and/or the shape is equal to or smaller than a threshold, compared to the reference spatial resolution.

3. The electromagnetic wave measurement device according to claim 1, further comprising:
an internal state recognition unit that recognizes the spatial variation in the internal state of the sample; and
a shape recognition unit that recognizes the spatial variation in the shape of the sample,
wherein the spatial resolution determination unit determines the spatial resolution, in accordance with the spatial variations in the internal state and the shape.

4. The electromagnetic wave measurement device according to claim 3,
wherein the electromagnetic wave irradiation unit irradiates the sample with the electromagnetic wave having a reference spatial resolution, and
the spatial resolution determination unit lowers the spatial resolution of the electromagnetic wave for irradiating a portion in which the spatial variation in the internal state is equal to or smaller than a first threshold and the spatial variation in the shape is equal to or smaller than a second threshold, compared to the reference spatial resolution.

5. The electromagnetic wave measurement device according to claim 3, further comprising:
a sample driving unit that moves the sample between an internal state measurement position where the electromagnetic wave irradiation unit and the electromagnetic wave detection unit are provided and a shape measurement position where the shape is measured.

6. The electromagnetic wave measurement device according to any one of claims 1 to 5, further comprising:
an electromagnetic wave size control unit that controls a size of the electromagnetic wave for irradiating the object by the electromagnetic wave irradiation unit, in accordance with the spatial resolution determined by the spatial resolution determination unit.

7. The electromagnetic wave measurement device according to any one of claims 1 to 5,
wherein the electromagnetic wave is a terahertz wave.

8. The electromagnetic wave measurement device according to any one of claims 1 to 5,
wherein the internal state includes an internal stress of the sample.

9. An electromagnetic wave measurement method comprising:
an electromagnetic wave irradiation step of irradiating a sample with an electromagnetic wave;
an electromagnetic wave detection step of detecting the electromagnetic wave from the sample;
a recognition step of recognizing a spatial variation in an internal state and/or a shape of the sample, based on the electromagnetic wave detected in the electromagnetic wave detection step; and
a spatial resolution determination step of determining a spatial resolution of the electromagnetic wave for irradiating each portion of an object of the same type as the sample, in accordance with the spatial variation in the internal state and/or the shape.

10. An electromagnetic wave measurement program that causes a computer to execute a process comprising:
an electromagnetic wave irradiation step of irradiating a sample with an electromagnetic wave;
an electromagnetic wave detection step of detecting the electromagnetic wave from the sample;
a recognition step of recognizing a spatial variation in an internal state and/or a shape of the sample, based on the electromagnetic wave detected in the electromagnetic wave detection step; and
a spatial resolution determination step of determining a spatial resolution of the electromagnetic wave for irradiating each portion of an object of the same type as the sample, in accordance with the spatial variation in the internal state and/or the shape.
